Europäisches Patentamt

European Patent Office

Office européen des brevets

(19)

(11) Publication number: 0 449 213 A2

## (12) EUROPEAN PATENT APPLICATION

(21) Application number: 91104781.9

(22) Date of filing: 26.03.91

(51) Int. Cl.⁵: **G11B 20/18, G11B 27/00**

(30) Priority: 27.03.90 JP 79635/90
29.03.90 JP 81683/90

(43) Date of publication of application:
02.10.91 Bulletin 91/40

(84) Designated Contracting States:
DE FR GB NL

(71) Applicant: SANYO ELECTRIC CO., LTD.
18, Keihanhondori 2-chome
Moriguchi-shi Osaka-fu(JP)

(72) Inventor: Tokumatsu, Hiromu
3-12-903, Chuo 3-chome, Jotou-ku
Osaka-shi, Osaka(JP)
Inventor: **Shinohara, Mitsuru**
207, Peti-Residence, 1-4-10, Asashi
Oizumi-machi, Ora-gun, Gunma(JP)
Inventor: **Kitazume, Hisao**
102 Cooperative Kurihara, 1226 Iida-cho
Ohta-shi, Gunma(JP)

(74) Representative: **Glawe, Delfs, Moll & Partner**
**Patentanwälte**
**Postfach 26 01 62 Liebherrstrasse 20**
**W-8000 München 26(DE)**

(54) Interleave address generating circuit of digital audio tape recorder.

(57) An interleave address generating circuit for accessing a RAM of a digital audio tape recorder. The DAT has a normal mode and a long-time recording mode in which the interleave formats for writing data into the RAM are different from each other. Pulse signals each having three pulses or pulse signals each having four pulses are alternately supplied to two counters having different initial values. An address signal is generated from the count value. Thus, interleave addresses in the normal mode and in the long-time recording mode are generated by a simple circuit. By generating an address signal for removing the data in half the area of the RAM and accessing the data in the other half area, the data recorded in the long-time recording mode is reproduced at double the normal speed at the time of after-recording.

FIG. 1

## BACKGROUND OF THE INVENTION

### Field of the Invention

The present invention relates to an interleave address generating circuit of a digital audio tape recorder (hereinunder referred to as "R-DAT") for recording a sound signal as digital data on a magnetic tape by using a rotary head. (Such a digital audio tape recorder will be hereinunder referred to as "R-DAT".)

### Description of the Related Art

With the progress of digital technique, digital recording has come to be adopted for recording various signals. In the field of sound signal recording, compact disks and the like which adopt digital recording have become widespread.

Among these apparatuses which utilize digital recording, digital audio tape recorders (DAT) which are capable of not only reproducing but also recording a sound signal have attracted attention.

DAT's are advantageous in that since a sound signal is recorded on a magnetic tape as digital data, they are free from the problems such as wow flutter, hiss noise and modulation noise, which are inevitable in analog recording, and in that since they have a wide dynamic range which can realize flat frequency characteristics in a wide frequency, recording and reproduction with a high sound quality is realized.

There are two types of DAT's. One utilizes a rotary head, and the other utilizes a fixed head. DAT's using a rotary head (R-DAT) have been standardized and increasingly produced as manufactured goods.

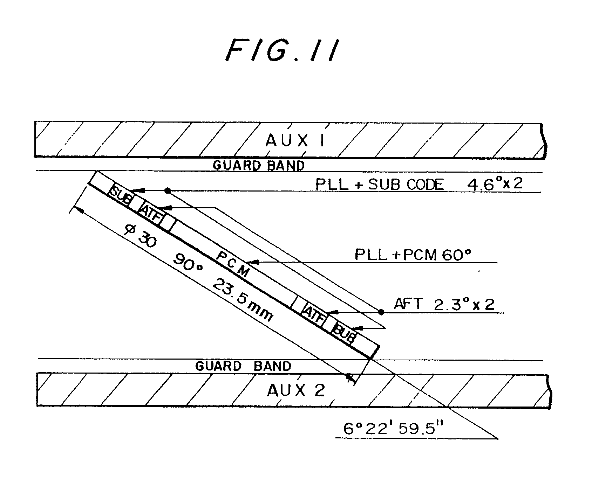

In an R-DAT, a signal is stored in each track inclined at a little over 6° with respect to the direction of travel of the magnetic tape, as shown in Fig. 11.

Each track is separated into an area for recording sub codes consisting of various kinds of information necessary for reproduction, an area for recording an ATF signal for tracking, etc. as well as an area for recording digital sound data (PCM).

The rotary head is provided with two magnetic heads for tracing tracks of the magnetic tape and two tracks are traced in one revolution of the rotary head. The magnetic tape is so designed as to come into contact with the rotary head which rotates at a high speed only in the range of 90°.

Consequently, sound data are intermittently recorded and reproduced on and from the magnetic tape by the magnetic head, and in order to input and output continuous sound, it is necessary to convert the time axis of data.

DAT's adopt an interleave format for recording data in dispersion in order to suppress a random error or a burst error which is produced in recording data on the magnetic tape to the minimum.

In order to convert the time axis and record and reproduce data in the interleave format, RAM for storing a considerable amount of data is necessary.

In recording data, after the time axis is converted, data for two tracks are written in the RAM in the interleave format and while the data for the next two tracks are written, the data for the two tracks stored in the RAM are read out and recorded on the magnetic tape. In reproducing the data, the data read out of the magnetic tape is temporarily written into the RAM and after de-interleaving the data read out of the RAM, the time axis is converted.

The conversion between an analog sound signal and a digital sound signal is carried out by an A/D converter and a D/A converter. In DAT's, three sampling frequencies, namely, 48 kHz, 44.1 kHz and 32 kHz are prepared as a sampling frequency for sampling the digital data from a sound signal in the A/D converter, thereby enabling a long-time recording and direct transmission and reception of the digital signal to and from another audio apparatus.

As a long-time playing mode, there is a 32 kL mode in which the sampling frequency is 32 kHz and recording and reproduction for twice the time as in a normal mode are possible.

In the 32 kL mode, the sound data supplied from both right and left channels are subjected to A/D conversion at a sampling frequency of 32 kHz to obtain digital data of 16 bits, and the digital data of 16 bits are further logarithmically compacted to data of 12 bits. These data are separated into data of 8 bits and data of 4 bits and three items of 8-bit data are produced from the thus-obtained two pieces of 8-bit data and two pieces of 4-bit data supplied from the right and left channels. These data are written in a RAM in a predetermined format.

If the amount of data is compacted to 3/4, the data obtained in twice the time is 2 x 3/4, namely, 1.5 times as large as the amount of data in the normal mode. Since the RAM is prepared in correspondence with the data obtained at a sampling frequency of 48 kHz, it is capable of store 1.5 times the amount of data obtained at a sampling frequency of 32 kHz.

It is therefore possible to store all the data obtained in twice the time into the RAM, thereby enabling utilizing a magnetic tape for twice as long a time and long-time recording and reproduction for twice as long a time as in the normal mode.

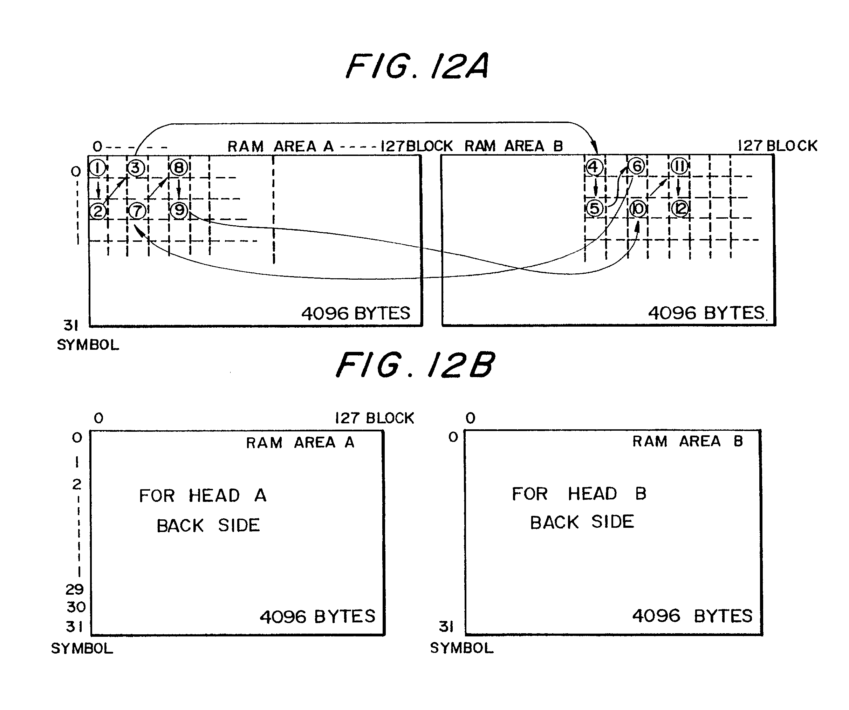

The interleave format in the 32 kL mode is shown in Fig. 12. After three items of data are written into the area for a head A (area corresponding to one track which one magnetic head traces), the next three items of data are written into the area for a head B (area corresponding to one track which the other magnetic head traces) in the same order. One area consists of 128 blocks (1 block consists of 32 symbols and one symbol consists of 8 bits), and the 24 blocks at the central portion are an area for error correction codes.

The symbol addresses (0 to 4095 for the head A and 4096 to 8191 for the head B) in the interleave format are arranged as [0, 2, 64 ...], and [6528, 6530, 6590 ...]

In order to generate such interleave addresses in the 32 kL mode, a counter which is capable of counting the numbers corresponding to the RAM of 128 KB (0 to 36383) and the output of the counter is decoded by an exclusive decoder to generate an interleave address.

However, the generation of such an interleave address in the 32 kL mode suffers from the problem that since the timing for generating the interleave address is different from the timing for germinating an interleave address in the normal mode and the interleave system is quite different between the two modes, the circuit for generating the interleave address in the 32 kL mode becomes very complicated.

In the interleave in the normal mode, 16-bit data obtained in one sampling at any given sampling frequency is divided into two items of 16-bit data, which are written into the RAM. In the 32 kL mode, however, three items of 8-bit data are produced from two items of 16-bit data, which are written into the RAM, as described above. Therefore, the sampling period in the A/D converter is different from the timing for writing the data into the RAM.

In addition, since the interleave system in the 32 kL mode is completely different from that in the normal mode, it is necessary to provide a decoder separately from the one for the normal mode. The decoder unit therefore disadvantageously becomes very complicated and large-sized.

As shown in Fig. 11, a track is provided with a SUB area for recording a sub code consisting of the head or the number of a recorded music and the like and an ATF area for recording an ATF signal for tracking as well as a PCM area for recording digitalized sound data (PCM). Among these plurality of areas constituting the track, the sub code area SUB is composed of 8 blocks consisting of sub code data of 32 symbols each having 8 bits, namely, 256 bits in total, an ID code of 8 bits, etc., and the PCM area is composed of 128 blocks consisting of PCM sound data of 32 symbols, an ID code of 8 bits, etc.

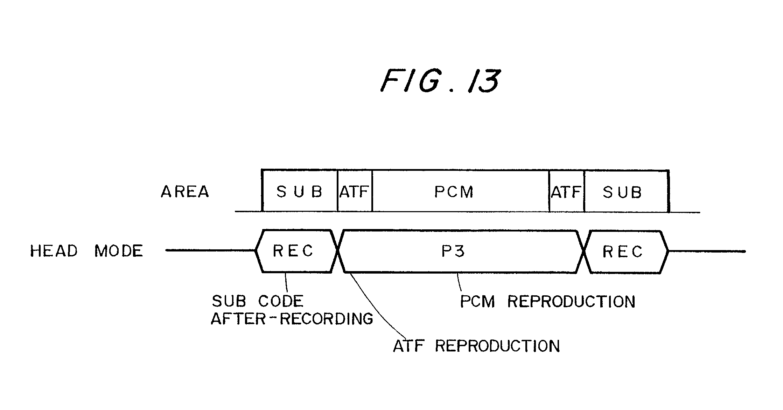

Since the SUB area in which the sub code data is recorded and the PCM area in which the PCM sound data is recorded are separated from each other on the track, what is called after-recording is possible in which only the sub code data is rewritten while reproducing the PCM sound data. That is, it is possible to rewrite only the sub code data while reproducing the sound data by switching the mode of the magnetic head to the recording mode to rewrite the desired sub code when the magnetic head tracing the track reaches the SUB area in which the sub code data is recorded, while switching the mode of the magnetic head from the recording mode to the reproducing mode when the magnetic head reaches the PCM area in which the PCM sound data is recorded, as shown in Fig. 13.

In the format of the standardized R-DAT, the same sub code data must be recorded for 300 frames (300 revolutions of the drum) for the convenience such as high-speed research. Therefore, after-recording the sub code data in the normal recording and reproducing mode in which the drum with two magnetic heads mounted thereon opposed to each other at $180^\circ$ rotates at 2,000 rpm, the magnetic tape travels at 8.1 5 mm/s and the sampling frequency is 48 kHz takes about 9 seconds.

As described above, the after-recording of the sub code data in the normal recording and reproducing mode takes about 9 seconds, but an R-DAT has a long-time recording and reproducing mode which enables long-time recording as well as the normal recording and reproducing mode.

The long-time recording and reproducing mode is a mode for recording and reproducing at a drum rotational speed of 1,000 rpm, a magnetic tape travelling speed of 4.075 mm/s and a sampling frequency of 32 kHz. The amount of data processed is half the amount of data in the normal recording and reproducing mode, so that it is possible to record for twice the time in the normal mode if the length of the magnetic tape is the same.

However, in order to rewrite only the sub code data in after-recording after when the sub code data and sound data are recorded in a long-time mode, the time required for writing of the sub code for 300 frames is twice as long as the time in the normal mode, namely, about 18 seconds because the drum rotational speed and the magnetic tape travelling speed are 1/2 of those in the normal mode.

It is naturally possible to rewrite the sub code data in about 9 seconds if after-recording of the sub code data is carried out while setting the drum rotational speed at 2,000 rpm and the magnetic tape travelling speed at 8.15 mm/s. In this case, however, it is inconveniently impossible to reproduce the sound data recorded in the long-time mode.

To state this more concretely, in an R-DAT, two RAM's each having a capacity of 64 KB are used as buffer memories for temporarily storing data in order to intermittently supply data to the two magnetic heads or to reproduce continuous data from the intermittent data which are supplied from the two magnetic heads and to suppress the influence of a burst error to the minimum. At the time of recording, PCM sound data is interleaved and stored in one RAM of 64 KB and simultaneously data is read out of the other RAM of 64 KB and supplied to the magnetic heads.

At the time of reproduction, the sound data from the magnetic heads is stored into one RAM of 64 KB and simultaneously data is read out of the other RAM of 64 KB and reproduced.

Therefore, if the PCM sound data recorded in the long-time mode is read out at the drum rotational speed and the magnetic tape travelling speed in the normal mode, twice the amount of data is stored from the magnetic heads to the RAM, so that while the data is read out of the RAM of 64 KB, the next data is written into the same RAM, thereby making the accurate reading of the PCM sound data impossible.

SUMMARY OF THE INVENTION

Accordingly, it is an object of the present invention to solve the above-described problems in the related art and to provide an interleave address generating circuit of a digital audio tape recorder which is capable of generating an interleave address in the complicated 32 kL mode in a simple circuit.

It is another object of the present invention to provide an interleave address generating circuit of a digital audio tape recorder for after-recording which is capable of not only rewriting sub code data which has been recorded in a long-time mode in a short time and reproducing sound data generating an interleave address in the complicated 32 kL mode in a simple circuit.

An interleave address generating circuit of a digital audio tape recorder according to the present invention is characterized in that it is provided with a means for alternately generating two series of pulse signals in accordance with a clock pulse which is synchronous with the sampling period for the A/D conversion of a sound signal, two counters for respectively counting the input pulse signals of the two series, the two counters having the initial count values different from each other and a decoder for alternately selecting the outputs of the two counters in synchronism with the pulse generating periods of the pulse signals of the two series and decoding the selected outputs so as to generate address signals.

An interleave address generating circuit according to the present invention has the above-described structure. In other words, counters of two series are provided and pulses are alternately input in the counters for counting. If the symbol addresses for the RAM of the interleave in the 32 kL mode are divided into three groups, they become comparatively simple. Since the two counters are provided and the initial values of the counters are different from each other, the load of the decoder is lightened, thereby enabling the simplification of the entire structure including the decoder.

The after-recording method by a DAT according to the present invention comprises the steps of: rewriting the sub code data which has been recorded in a long-time recording mode in the normal mode; reading PCM sound data which has been recording in the long-time recording mode in the normal mode; storing the read-out sound data in a RAM as a buffer memory and; thinning out the stored PCM sound data by reading out only the PCM sound data at predetermined addresses and reproducing the thinned-out PCM sound data, thereby rewriting the sub code data in a short time which is approximately the same as in the normal mode while reproducing the PCM sound data.

As described above, in the after-recording method by a DAT according to the present invention, the sub code data which has been recorded in a long-time mode in which the drum rotational speed is 1,000 rpm, the magnetic tape travelling speed is 4.075 mm/s and the sampling frequency is 32 kHz is after-recorded in the normal mode in which the drum rotational speed is 2,000 rpm and the magnetic tape travelling speed is 8.15 mm/s.

At this time, the amount of PCM sound data read out by the magnetic heads is twice as much as that at the time of after-recording in the normal long time mode, but the read-out PCM sound data is stored in the RAM as a buffer memory and not all of the PCM data but only the PCM sound data stored at predetermined addresses is read out for reproduction. Therefore, even if the twice as much PCM sound data as that in the normal mode is read out by the two magnetic heads, the amount of PCM sound data does not exceed the capacity of the RAM, thereby enabling the reproduction of the PCM sound data.

Although the sound of the PCM sound data thinned out and reproduced in this way is different from the sound of the PCM sound data reproduced in the normal mode, if the amount of PCM sound data thinned out is set at about 1/2 of the stored PCM sound data and the thinned-out PCM sound data is reproduced at twice the speed, it is possible to reproduce sufficiently recognizable sound when the music number or the like is rewritten in after-recording.

The above and other objects, features and advantages of the present invention will become clear from the following description of the preferred embodiment thereof, taken in conjunction with the accompanying drawings.

BRIEF DESCRIPTION OF THE DRAWINGS

Fig. 1 is a block diagram of an embodiment of the structure of an interleave generating circuit of a digital audio tape recorder according to the present invention;

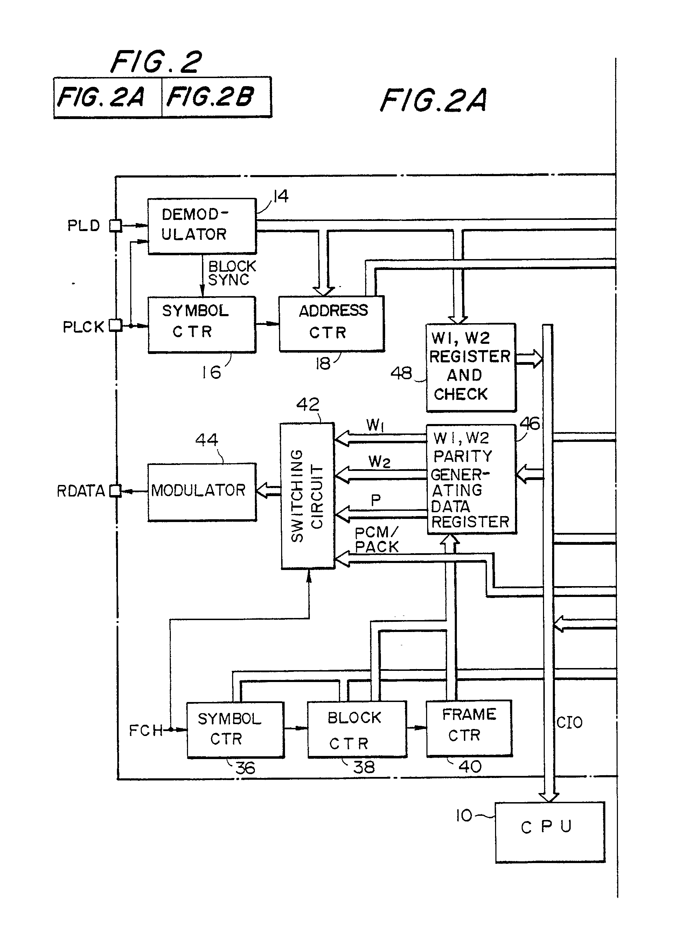

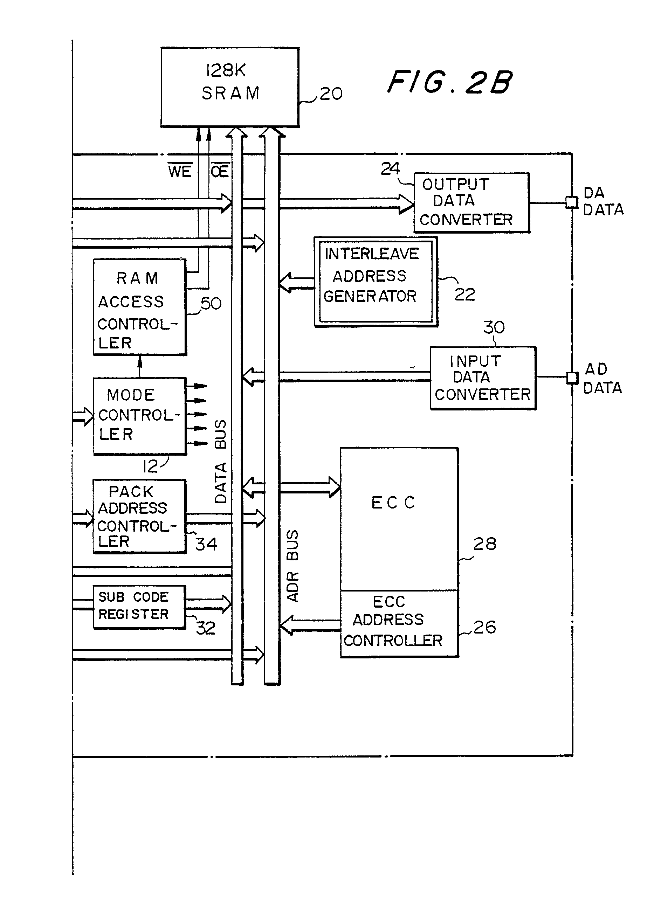

Fig. 2 shows the entire structure of an R-DAT to which an interleave address generating circuit according to the present invention is applied;

Fig. 3 is a circuit diagram of a pulse generation decoder 62 in the embodiment shown in Fig. 1;

Fig. 4 is a timing chart of the operation of the pulse generation decoder 62;

Fig. 5 is a circuit diagram of a decoder 80 in the embodiment;

Fig. 6 is a timing chart of the operation of the decoder 80;

Fig. 7 is an explanatory view of the processing of PCM sound data at the time of after-recording by using the embodiment shown in Fig. 1;

Fig. 8 is a circuit diagram of an interleave address controller in the embodiment;

Fig. 9 is a timing chart of the interleave address controller shown in Fig. 8;

Fig. 10 is an explanatory view of RAM access in the embodiment;

Fig. 11 is an explanatory view of the operation of storing data into the magnetic tape;

Fig. 12 is an explanatory view of an interleave format in the RAM 20 of the R-DAT; and

Fig. 13 is an explanatory view of a track format and the like in an R-DAT.

DESCRIPTION OF THE PREFERRED EMBODIMENTS

An embodiment of the present invention will be explained hereinunder with reference to the accompanying drawings.

⟨Explanation of the entire structure⟩

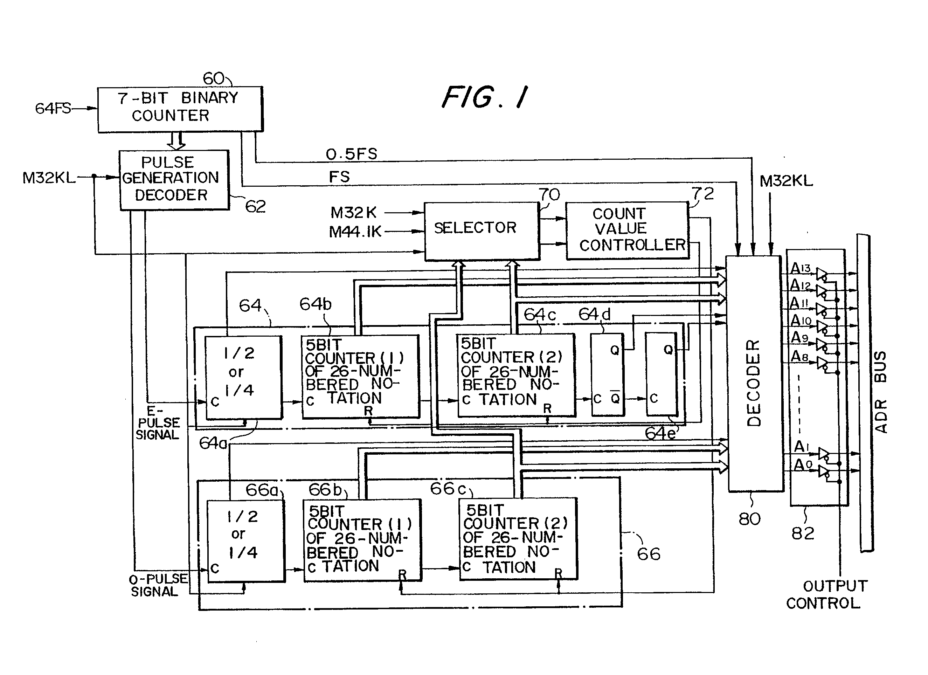

Fig. 1 is a block diagram of the entire structure of an embodiment. Control signal (mode data) is supplied from a CPU 10 to a mode controller 12 through a CIO data bus, and an output of the mode control circuit sets a mode such as reproduction, recording and high-speed search.

Reproduction

In a normal reproduction mode, the drum is rotated at 2,000 rpm and digital data recorded on a magnetic tape is read out by two magnetic heads A and B. A synchronous clock is produced from the sync bit in the read-out data by a PLL circuit (not shown). The PCM data read out of a track in accordance with the synchronous clock is input to a demodulator 14.

The demodulator 14 detects the sync signal SYNC in the input PCM data block and resets a symbol counter 16 and also subjects the input PCM data to 10 - 8 bit conversion. The symbol counter 16 counts the synchronous clocks and counts ID code data W1, block address data W2, parity P and PCM data, namely, 35 symbols in total (1 symbol after 10 - 8 conversion consists of 8 bits), which are input after the sync signal SYNC.

When the count value of the symbol counter 16 is [2], in other words, when the input of the block address data W2 of the data block is detected, the 7 bits in the block address data W2 having 8 bits which are output from the demodulator 14 are set at bits $A_5$ to $A_{11}$ in an address counter 18.

The lower 5 bits $A_0$ to $A_4$ of the address counter 18 are counter outputs for counting the 32 symbols of the PCM data, while the upper two bits $A_{12}$ and $A_{13}$ are bits for outputting a switching signal for the magnetic heads A and B and a 1/2 frequency division signal thereof. When the first symbol of the PCM data is input, the RAM 20 having 128 KB is accessed by the output of the address counter 18 and the PCM data symbol output from the demodulator 14 is written in the RAM 20.

While the data read out of the magnetic heads A, B are written into the half part of the RAM, namely, 64 KB, the other half part 64 KB is accessed at the sampling frequency by an interleave address generator 22, and the PCM data stored at the address which is designated by the interleave address generator 22 is supplied to an output data converter 24, which converts the PCM data of 8 bits into the data of 16 bits and supplies it to a D/A converter for reproduction.

At the time of normal reproduction, when a predetermined amount of PCM data is stored in the RAM 20, an ECC address controller 26 accesses the RAM 20 and supplies the PCM data to an ECC circuit 28. The ECC circuit checks a C1 code from the input data and writes again the corrected data into the RAM 20. When the data for one track, namely, all the data read out by either of the magnetic heads A and B is stored in the RAM 20, the ECC address controller 26 and the ECC circuit 28 check a C2 code so as to correct the data.

Recording

A control signal designating the recording mode and the sampling frequency is supplied from the CPU 10 to the mode controller 12, and the internal circuit is set at the recording mode. Data subjected to A/D conversion in accordance with the designated sampling frequency is input to an input data converter 30, which separates the data of 16 bits into data of 8 bits. The symbol which is converted into 8 bits is interleaved and written into the part of 62 KB of the RAM 20 by the interleave address generator 22. The C1 codes and C2 codes are produced from the written symbol by the ECC circuit 28, and are stored again in a predetermined area of the RAM 20.

The CPU 10 outputs SUB code data which is recorded together with sound data to a SUB code register 32. The SUB code register 32 produces pack data including a parity on the basis of the stored SUB code data. A pack address controller 34 writes the thus-produced pack data into the area of 64 KB for storing the C1 and C2 codes of the RAM 20 which has finished writing data into the magnetic head. The EEC circuit 28 produces the C1 code from the written pack data and it is stored again in the RAM 20.

In order to output the data written in the RAM 20 to the magnetic heads A, B, the address of the RAM 20 is first designated by a symbol counter 36, a block counter 38 and a frame counter f40 or counting written clocks FCH which are synchronous with the rotation of the rotary drum.

The data stored in the designated address is input to a modulator 44 through a switching circuit 42 and supplied to the magnetic heads A and B after 8 - 10 bit conversion.

The switching between the writing and reading into and from the RAM 20 with a change in the mode such as the reproduction mode and the recording mode is executed in accordance with the access control signal from a RAM access controller 50.

⟨Interleave address generating circuit⟩

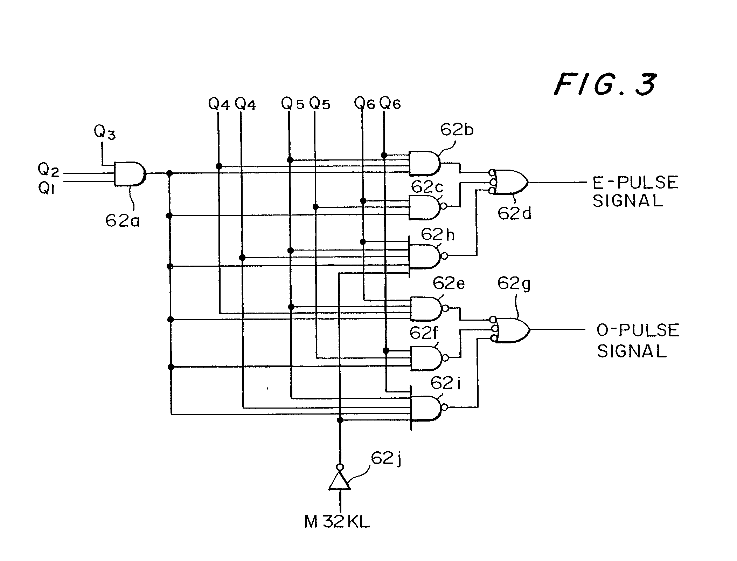

In the present invention, the interleave generator 22 adopts the structure which can easily correspond to the 32 kL mode. The concrete structure and the operation of the interleave address generator 22 will be explained with reference to Figs. 3 to 6.

Production of pulses of two series

In Fig. 1, a 64-FS clock signal having a period of 64 - which is created on the basis of a reference clock obtained by an oscillator (not shown) is input to a 7-bit binary counter 60. FS here represents a clock which corresponds to the sampling frequency. There are three kinds of sampling frequencies, namely, 32 kHz, 44.1 kHz and 48 kHz, as described above, and the clocks corresponding to 32 kHz and 48 kHz are obtained by dividing the frequency of the reference clock obtained by the same oscillator and the clock corresponding to 44.1 kHz is created on the basis of the reference clock obtained by another oscillator. The clocks are switched in accordance with the command from the CPU 10. Since the reference clocks are changed in accordance with the sampling frequency, it is possible to obtain the 64-FS clock signal which corresponds to the sampling frequency.

The 7-bit binary counter counts the 64-FS signals in two-numbered notation, and outputs an FS clock signal (divided into a 1/64 frequency) and a 0.5-FS signal (divided into a 1/128 frequency).

The signal at each step of the 7-bit binary counter is supplied to a pulse generation decoder 62. The pulse generation decoder 62 generates pulse signals for counting in the normal mode and the 32 kL mode in accordance with the output of the 7-bit binary counter 30. For this purpose, the pulse generation decoder 62 is composed of AND circuits, OR circuits and the like, as shown in Fig. 3, and outputs pulse signals of different two series, namely, an E-pulse signal and an O-pulse signal.

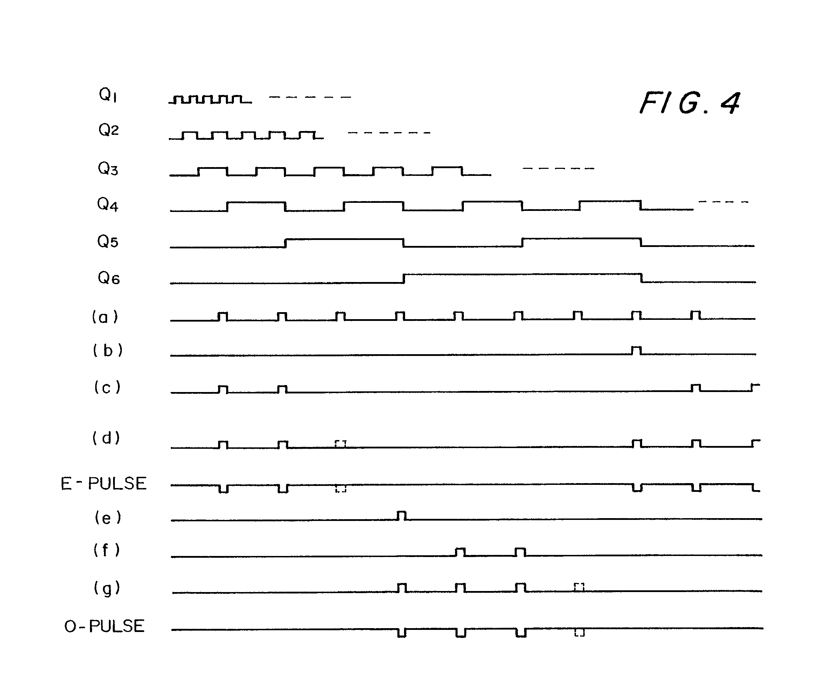

If it is assumed that the outputs in the respective stages of the 7-bit binary counter 60 are $Q_0$ to $Q_6$, the outputs $Q_1$ to $Q_6$ take the form of a 16-FS signal to a 0.5-FS signal, as shown in Fig. 4. These signals are subjected to a predetermined processing. Generation of signals in the 32 kL mode will first be explained.

The output of the 7-bit binary counter 60 to which the output $Q_1$ to $Q_3$ are input take the form of a pulse signal having a period of 4 FS which is indicated by (a) in Fig. 4.

The signal from the AND gate 62a and the outputs $Q_4$ to $Q_6$ are input to a NAND gate 62b, a signal indicated by (b) in Fig. 4 is output from the NAND gate 62b. Since the signal from the NAND gate 62a and the outputs $\overline{Q}_5$ and $\overline{Q}_6$ are input to a NAND gate 62c, a signal indicated by (c) in Fig. 4 is output from the NAND gate 62c. Since these signals are input to a NOR gate 62d, a signal indicated by (d) in Fig. 4 is output from the NOR gate 62d. The E-pulse signal is obtained by inverting the signal (d) in Fig. 4

On the other hand, the signal from the AND gate 62a indicated by (A) in Fig. 4 and the outputs $Q_4$, $Q_5$ and $\overline{Q}_6$ are input to a NAND gate 62e, a signal indicated by (e) in Fig. 4 is output from the NAND gate 62e. Since the signal from the NAND gate 62a and the outputs $\overline{Q}_5$ and $\overline{Q}_6$ are input to a NAND gate 62f, a signal indicated by (f) in Fig. 4 is output from the NAND gate 62f. Since these signals are input to a NOR gate 62g, a signal indicated by (g) in Fig. 4 is output from the NOR gate 62g. This signal (g) in Fig. 4 is the O-pulse signal.

In this way, in the 32 kL mode, the E-pulse signal and the O-pulse signal shown in Fig. 4 are output from the pulse generation decoder 62.

In a mode other then the 32 kL mode, the E-pulse signal and the O-pulse signal are generated by adding the pulse indicated by the broken line in Fig. 4 thereto, and four pulses of a 4-FS period are alternately output as the E-pulse signal and the O-pulse signal, respectively.

For this purpose, a NAND gates 62h and 62i are provided and the output thereof are input to the NOR gates 62d and 62g. An M32kL signal which outputs [H] in the 32 kL mode is input to the NOR gates 62h and 62i through an inverter 62j. Consequently, the NOR gates 62h and 62i outputs signals in a mode other than the 32 kL mode.

The signals $\overline{Q_4}$, $Q_5$ and $\overline{Q_6}$ as well as the signal from the inverter 62j are input to the NOR gate 62h. Consequently, the pulse indicated by the broken line in Fig. 4(d) is output in a mode other than the 32 kL mode. In this way, the E-pulse signal and the O-pulse signal each of which is one larger in the pulse number than in the 32 kL mode are obtained.

Generation of symbol address

The E-pulse signal and the O-pulse signal obtained by the pulse generation decoder 62 in this way are input to an E counter 64 and an O counter 66, respectively.

The E counter 64 is composed of a binary/quaternary counter 64a which is switchable between a binary counter and a quaternary counter and outputs $EQ_0$, two counters 64b, 64c of 26-numbered notation which are connected to the binary/quaternary counter 64a and output $EQ_2$ to $EQ_6$ and $EQ_7$ to $EQ_{11}$, respectively, and two flip-flops 64d, 64e for which output the upper digits thereof $EQ_{12}$ and $EQ_{13}$ thereof, respectively. Each of the counters 64b, 64c of 26-numbered notation counts up to [00000(0)] to [11001 (25)] in series.

The O counter 66 is composed of a binary/quaternary counter 66a which is switchable between a binary counter and a quaternary counter and outputs $OQ_0$, two counters 66b, 66c of 26-numbered notation which are connected to the binary/quaternary counter 64a and output $OQ_2$ to $OQ_6$ and $OQ_7$ to $OQ_{11}$, respectively. In the counter 66b of 26-numbered notation at the first stage, the initial value is set at [00110(8)]. The counter 66b counts from [00110(8)] to [11111 (31)] and the counter 66b of 26-numbered notation at the second stage counted from [00000 (0)] to [11001 (25)].

The outputs of the E counter 64c and the O counter 66c are supplied to a selector 70 and signals on the mode such as signals M32k and M48k are also supplied to the selector 70. Since the number of the items of PCM data is different depending upon the mode, the selector 70 determines the reset timings of the E counter 64 and the O counter 66 in accordance with the selected mode and controls the reset of the count values of the counters 64, 66 through a count value controller 72.

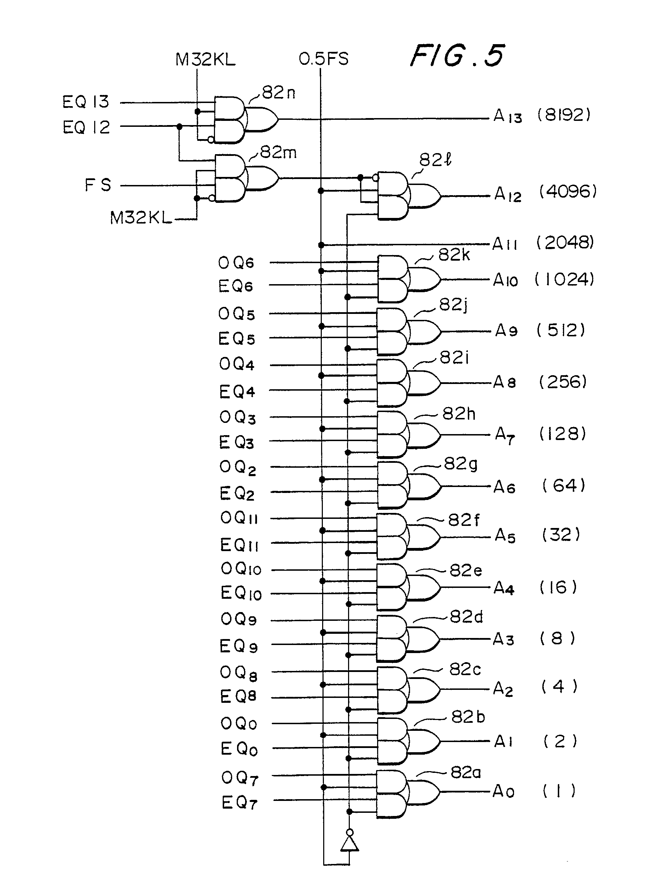

The output of each digit of the E counter 64 and the O counter 66 is supplied to a decoder 80. The decoder 80 has a structure such as that shown in Fig. 5 and outputs a writing or reading address of the RAM 20.

The outputs of $Q_7$, $Q_0$, $Q_8$, $Q_9$, $Q_{10}$, $Q_{11}$, $Q_2$, $Q_3$, $Q_4$, $Q_5$ and $Q_6$ are connected to the output lines $A_0$ to $A_{10}$ of the decoder 80 in that order through selecting gates 82a to 82k, respectively. 0.5-FS signals and the inverted signals thereof are supplied to each of the selecting gates 82a to 82k. When the 0.5-FS signal is [H], the output of the O counter 66 is selected, while when the 0.5-FS signal is [L], the output of the E counter 64 is selected.

The 0.5-F signal is connected to an output line $A_{11}$ as it is, and a selecting gate 82ℓ is connected to an output line $A_{12}$. The selecting gate 82i inverts the output of a selecting gate 82m in accordance with the 0.5-FS signal and the selecting gate 82m selects the output $EQ_{12}$ and the FS signal. In the 32 kL mode, the selecting gate 82ℓ inverts the output $EQ_{12}$ before outputting it when the 0.5-F signal is [H], and when the 0.5-F signal is [L], the selecting gate 82ℓ supplies the output $EQ_{12}$ as it is.

The selecting gate 82m is connected to an output line $A_{13}$ and selects the output $EQ_{13}$ in the 32 kL mode and selects the output $EQ_{12}$ in the other modes.

The operation of the decoder 80 having the above-described structure will be explained.

In the 32 kL mode, the 0.5-FS signal is started from [L] and the E pulse train is counted by the E counter 64.

Since all the initial values of the E counter 64 are 0, all the outputs of the output lines $A_0$ to $A_{13}$ are 0. When one pulse of the E series is input, the output of the binary/quaternary counter 64a is [H], and $EQ_0$ is [H], whereby the output of the output line $A_3$ is also [H]. The decoder 80 therefore outputs [00000000000010 (2)]. When the next E pulse is input, the output of the binary/quaternary counter 64a is [L], and the first digit $EQ_2$ of the counter 64b is [H], whereby the output of the output line $A_6$ is also [H]. The decoder 80 therefore outputs [000000010000000 (64)]. In this embodiment, since only two pulses are output at the initial stage, as shown in Fig. 4, it is possible to output [2] and [64] from the initial value 0. Thereafter, three values are output from three pulses.

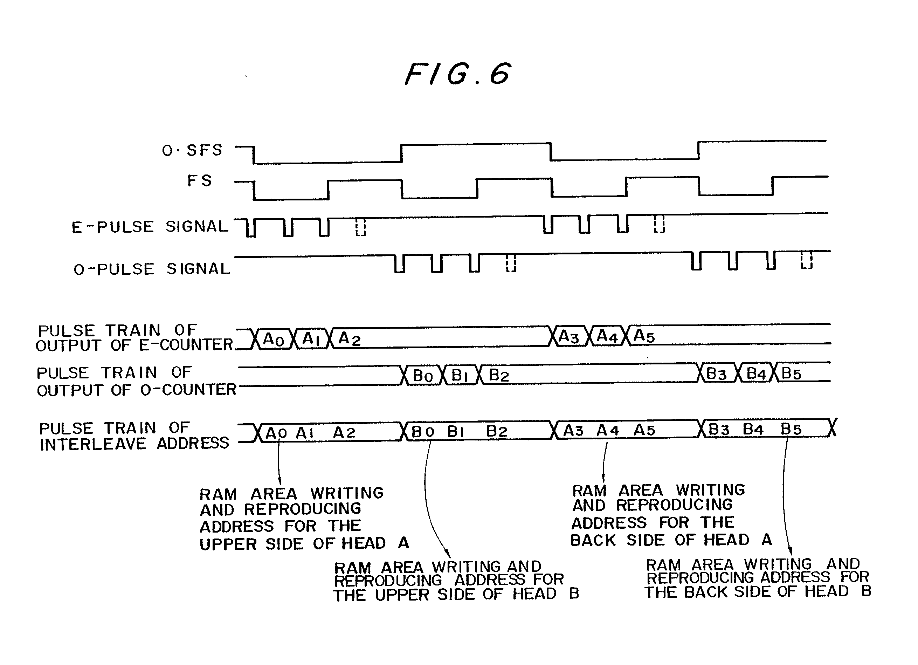

Thus, from outputs $A_0$, $A_1$ and $A_2$ of the E counter 64 shown in Fig. 6, symbol addresses for three items of data [(1), (2) and (3)] shown in Fig. 12 are output.

This operation is carried out in accordance with the 1-FS signal, so that it is possible to write the data of 32 bits to the RAM 20 as data of 24 bits (3 symbols).

The 0.5-FS signal is then risen, whereby the switching circuit 82a to 82$\ell$ are switched. The output line $A_{11}$ outputs [H] of the 0.5-FS signal as it is, and the output line $A_{12}$ inverts the [L] of the $EQ_{12}$ and outputs [H]. The output lines $A_0$ to $A_{10}$ selects and outputs the outputs of the O counter 66. The counter 66b of 26-numbered notation of the O counter 66 is set at [00110] as the initial value. Therefore, the outputs $OQ_3$ and $OQ_4$ of the O counter 66 are [H] and the other outputs are [L]. The outputs of the output lines $A_7$ and $A_8$ are [H] and the decoder 80 therefore outputs [01100110000000 (6528)]. The O-pulse signal has three pulses from the initial stage. In order to obtained the above-described value as the first output, the O counter 66 is actually set at a value as the initial value which becomes [00110] when one pulse is input.

When the next pulse is input, the output line $A_1$ outputs [H] and the decoder 80 outputs [6592].

In this way, symbol addresses for three items of data [(4), (5) and (6)] shown in Fig. 12 are output in accordance with the outputs of $B_0$, $B_1$ and $B_2$ of the O counter 66 shown in Fig. 6.

Since the signal is switched over to the 0.5-FS signal, the pulse E is input to the E counter 64 and the output of the output lines $A_{11}$ and $A_{12}$ are restored to [L]. The binary/quaternary counter 64a then outputs [H], the outputs $EQ_0$ and $EQ_2$ become [H] and the decoder 80 outputs [66]. At the input of the next pulse, the outputs $EQ_0$ becomes [H] and [128] is output and at the input of another pulse, the outputs $EQ_0$ and $EQ_3$ become [H] and the decoder 80 outputs [130]. In this way, by inputting three pulses, the symbol addresses for the 32 kL mode are output in series.

When the counters 64b, 66b of 26-numbered notation have counted up to 26, they supply the outputs [H] to the counters 64c, 66c of 26-numbered notation. The output $Q_{07}$ therefore becomes [H] and the process proceeds to the output of odd symbol addresses.

The reason why 26-numbered notation is adopted is as follows. The RAM 20 of 1.2 KB is composed of the four areas, as shown in Fig. 12. On area is composed of blocks 0 to 127, namely, 128 blocks in total. The 52-th block to the 75-th block in each area is an area for correcting errors in which no PCM data supplied from the A/D con-

verter is written.

When $EQ_{12}$ becomes [H] with the progress of the counting process, the output line $A_{12}$ outputs [H]. By this time, the addresses for 4096 symbols in total for the left-hand side area on the upper side of the head A and the right-hand area on the upper side of the head B have been output. When $EQ_{12}$ becomes [H], the timing at which $A_{12}$ becomes [H] with respect to the 0.5-FS signal is inverted. The decoder 80 thus outputs the symbol addresses [4096, 4098, 4160 ...] for the right-hand side area on the upper side of the head A and the left-hand area on the upper side of the head B. Similar interleave addresses are output for these areas.

When the addressing of the upper side areas of the heads A and B are finished in this way, $EQ_{13}$ becomes [H]. The output line $A_{13}$ outputs [H], and addresses for the back side areas are similarly output.

In this way, the interleave addresses in the 32 kL mode are output.

On the other hand, in the normal mode, the signal M32kL is [L], and the binary/quaternary counters 64a and 64b are switched over to the quaternary counters. The E- and O-pulse signals each consisting of four pulses are output from the pulse generation decoder 62 as the 1-FS signal.

The selecting gates 82a to 82k switch the outputs EQ from the EQ counters 64 and 66 to the outputs OQ. The selecting gate 82m selects an FS signal and the selecting gate 82$\ell$ inverts the FS signals in correspondence with the 0.5-FS signal and outputs them in series.

With the input of the pulse E to the binary/quaternary counter 64a, the output $EQ_0$ changes from [L] to [H], [L] and [H]. The output line $A_1$ to which the output $EQ_0$ of the binary/quaternary counter 64a is connected also changes in the same manner and outputs [0, 2, 0, 2].

Since the selecting gate 7$\ell$ inverts the FS signal in correspondence with the 0.5-FS signal in series, the output line $A_{12}$ outputs [LLHH, LLHH] in repetition. On the other hand the output line $A_{11}$ outputs [LLLL, HHHH] in repetition. With respect to only these two output lines, the outputs are [0, 0, 4096, 4096, 6144, 6144, 2048, 2048]. Since the initial value of the O counter 66 is set at [00110], as described above, the outputs of the decoder 80 are [0, 2, 4096, 4098, 6528, 6530, 2432, 2434]. In this way, since the symbol addresses are output by utilizing the outputs of the binary/quaternary counters 64a, 66a, the counters 64, 66 finish the output of all the symbol addresses of the RAM 20 by counting up to half the value in the normal mode. Therefore, when the output $EQ_{12}$ of the flip-flop 64d becomes [H], the output [H] of selecting gate 82n is output to the output line $A_{13}$, whereby the

areas for the upper surfaces of the head A, B in the RAM are changed over to the areas for the back over to the areas for the back surfaces thereof.

In this way, the symbol addresses in the normal mode are output.

The outputs of the decoder 80 are supplied to an address bus ADD BUS at a predetermined timing through a gate 82.

⟨After-recording data recorded in a long-time recording mode⟩

The case of after-recording the sub code data and PCM sound data recorded in the 32 kL mode in which the drum rotational speed is 1,000 rpm, the magnetic tape travelling speed is 4.075 mm/s and the sampling frequency is 32 kHz will now be considered.

In the case of after-recording in the 32 kL mode in which the drum rotational speed is 1,000 rpm and the magnetic tape travelling speed is 4.075 mm/s, the magnetic heads A, B are switched over to the recording mode by the control signal from the mode controller 12 in the area in which the sub code data is recorded, while in the PCM area in which the PCM sound data is recorded, the magnetic heads A, B are switched over to the reproducing mode for carrying out after-recording. At this time, the sub code data for 300 frames, namely, for 600 tracks must be rewritten, and the time required for rewriting is about 18 seconds.

In order to shorten the after-recording time to about 1/2, in this embodiment, after-recording is carried out in the normal mode in which the drum rotational speed is 2,000 rpm and the magnetic tape travelling speed is 8.15 mm/s. At this time, the amount of PCM sound data read out of the magnetic heads A is twice as much as that in ordinary after-recording in the long-time mode, as described above, so that it is impossible to read out and reproduce the PCM sound data stored in the RAM 20 as it is.

In this embodiment, the PCM sound data read out of the magnetic heads A, B is thinned out to reduce the amount to 1/2, thereby realizing the rewriting of the sub code data in about 9 seconds and also enabling the reproduction of the PCM sound data.

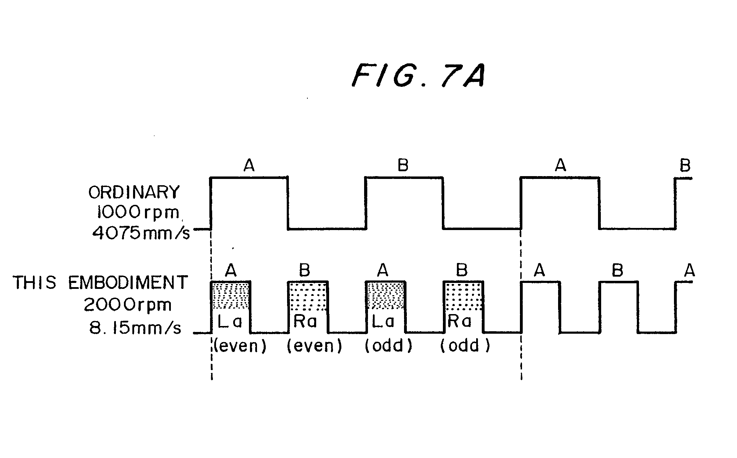

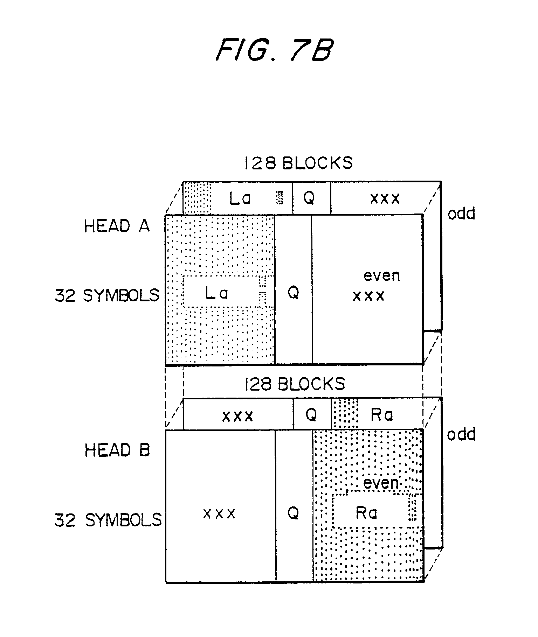

The method of thinning out the PCM sound data in this embodiment will be explained in detail hereinunder with reference to Figs. 7 to 10.

Fig. 7(A) is a schematic timing chart of the reproduction of PCM sound data by the magnetic heads A, B in ordinary after-recording and the reproduction of PCM sound data by the magnetic heads A, B by the after-recording method in this embodiment.

Since the rotational speed of the drum and the magnetic tape travelling speed are set at twice the speed in ordinary after recording in this embodiment, the PCM sound data for four tracks are read out by the two magnetic heads A, B during one rotation of the drum, namely, during the period when PCM sound data is read out by the magnetic heads A, B in ordinary after-recording. The PCM date read out by the magnetic head A is stored in the area A of the RAM of 64 KB, while the PCM date read out by the magnetic head B is stored in the area B of the RAM of 64 KB. That is, the PCM sound data for two tacks, namely, one frame is stored. The PCM sound data for next one frame read out by the magnetic heads A, B are stored in another RAM of 64 KB of the RAM 20. At this time, the PCM sound data stored in the other RAM of 60 KB are read out but not all the stored data but only the PCM sound data stored in a predetermined address, namely, the PCM sound data stored in the address in the left-half area La of the area A and the PCM sound data stored in the address in the right-half area Rb of the area B are read out. Thus, the amount of data is reduced to 1/2 (see Fig. 7(B)-).

At the time of recording, PCM sound data are recorded in the interleave format, as described above. In the interleave format, PCM sound data is stored in series from the addresses of the left-half area La of the area A and the right-half area Rb of the area B of the RAM of 64 KB, it is possible to reproduce the PCM sound data without the need for any modification the de-interleave circuit for reading out the interleave format.

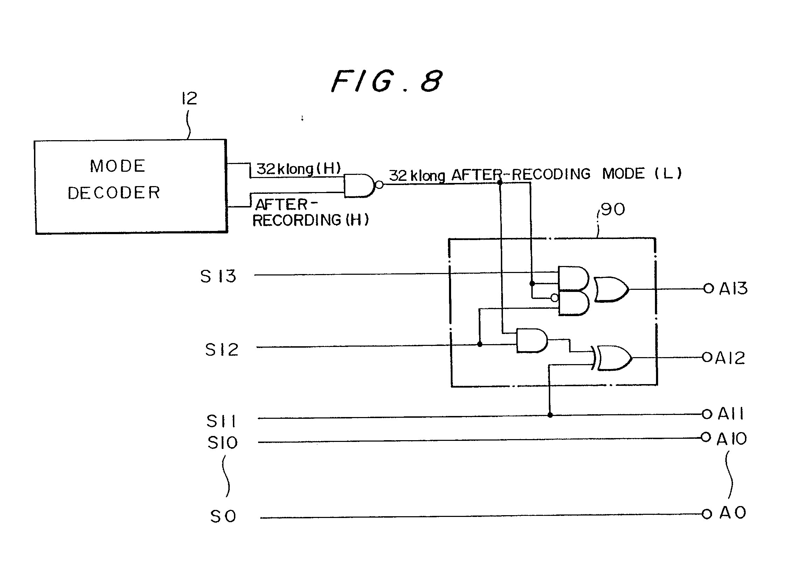

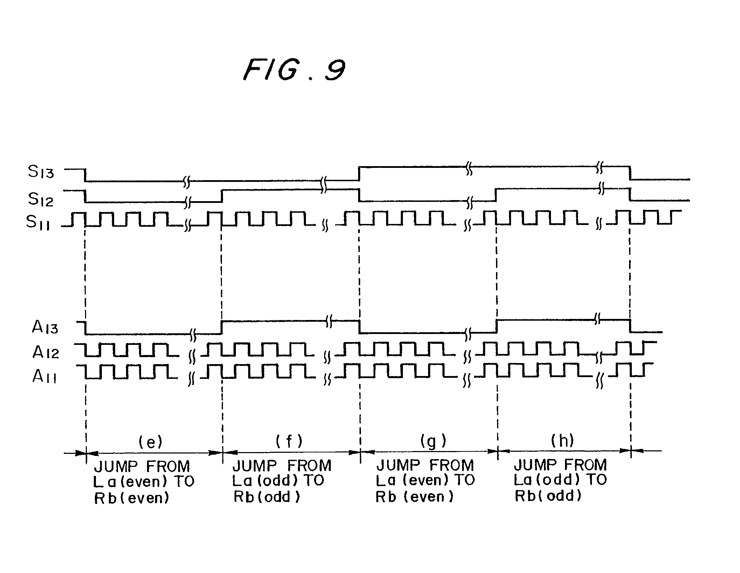

Fig. 8 is a circuit diagram of an interleave address controller 90 for controlling the addresses of the RAM 20 for thinning out the PCM sound data and Fig. 9 is a timing chart of the circuit shown in Fig. 8.

The interleave address controller 90 in this embodiment controls the outputs $S_0$ to $S_{13}$ of the output lines $A_0$ to $A_{13}$ of the decoder 80 of the interleave address generator 22 shown in Fig. 5 in accordance with a mode signal from the mode controller 12.

In other words, in this embodiment, the outputs $S_{11}$ to $S_{13}$ of the decoder 80 are controlled by the interleave address controller 90 which is composed of an AND gate, an EX-OR gate and the like, and only the addresses of the left-half area La of the area A and the right-half area Rb of the area B are designated. Thus, the data stored in the area of these addresses are selected from all the data stored in the RAM 20 and read out. To state this more concretely, when the output of the mode controller 12 is at an H level which shows the long-time mode of a sampling frequency of 32 kHz and an H level which shows the after-recording mode, an L-level signal is input to the interleave address circuit 90 through a NAND gate.

By the input of the L-level signal, the output of the output line $A_{12}$ of the decoder 80 falls to an L-level when the output of the output line $A_{11}$ is at an L-level and rises to an H-level when the output of the output line $A_{11}$ is at an H-level. In this way, the output lines $A_{11}$ and $A_{12}$ have the same output waveform (see Fig. 9).

On the other hand, the output of the output line $A_{13}$ is not dependent on the output level of the output $S_{13}$ (the output of the AND gate is constantly at an L level irrespective of the output level of the output $S_{13}$ so long as the L level is output from the mode controller 12) and has the same waveform as the output of the output line $A_{12}$. The output lines $A_{11}$ to $A_{13}$ designate the following operations:

$A_{11}$: switching between the left-hand areas and the right-hand areas of the magnetic heads A and B;

$A_{12}$: switching between the areas A and B

$A_{13}$: switching between the RAM's of 64 KB, namely, switching between an even frames and an odd frame.

As shown in the timing chart of Fig. 9, when the output address signal $A_{13}$ is [L], the RAM of 64 KB for even frames is selected from the RAM 20. During this time, when the output of the output line $A_{11}$ is at an L-level and $A_{12}$ is at an L-level, the addresses of the left-half area La of the area A are designated, and when the output of the output line $A_{11}$ is at an H-level and $A_{12}$ is at an H-level, the addresses of the right-half area Rb of the area B are designated and the PCM sound data of those addresses is read out.

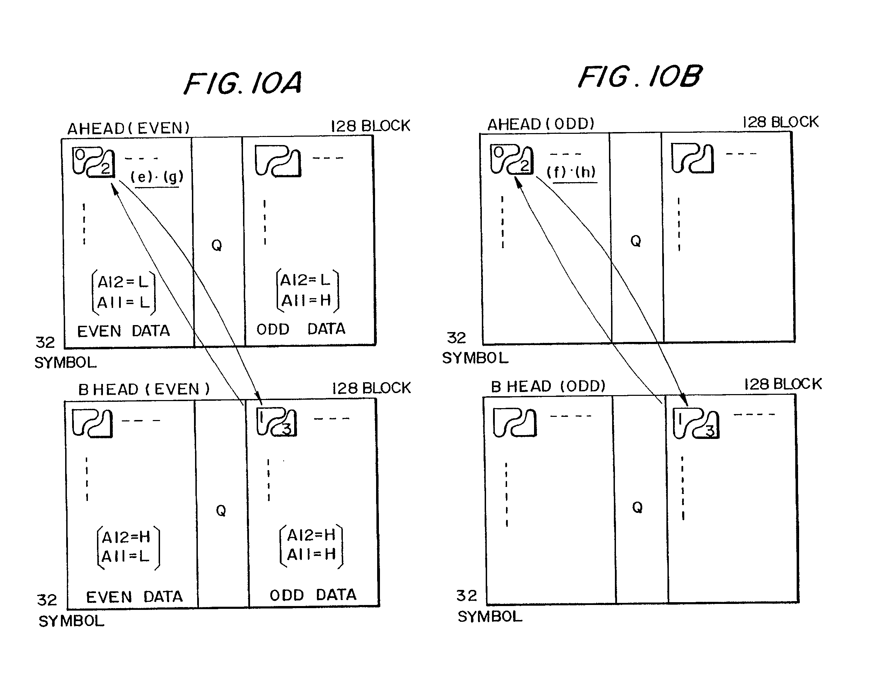

After all the addresses of La and Rb are designated, the output of the output line $A_{13}$ rises to an H-level, and the RAM of 64 KB for odd frames are selected from the RAM 20. Since the output waveforms of the output lines $A_{11}$ and $A_{12}$ are the same, the addresses of the left-half of the area A and the right-half of the area B are alternately designated in the same way as in the RAM of 64 KB for even frames (see Fig. 10). Consequently, the addresses of the right-half area Ra of the area A and the left-half area Lb of the area B are not designated, so that the PCM sound data stored in the area of these addresses is not read out.

The PCM sound data reduced to 1/2 in this way is reproduced by a D/A converter or the like. This reproduction is carried out in half the time in ordinary reproduction, in other words, at at double the speed.

Thus, according to the present invention, it is possible to rewrite sub code data in a short time and at the same time reproduce PCM sound data by not all the PCM sound data stored in a RAM but only the data necessary for reproduction is read out by utilizing the function of the RAM as a buffer memory.

While there has been described what is at present considered to be a preferred embodiment of the invention, it will be understood that various modifications may be made thereto, and it is intended that the appended claims cover all such modifications as fall within the true spirit and scope of the invention.

## Claims

1. An interleave address generating circuit for specifying the location to be accessed in a RAM for recording data of a digital audio tape recorder, said interleave address generating circuit comprising:

   (A) a pulse generating means for alternately generating pulse signals of two series in accordance with a clock pulse which is synchronous with a sampling period for the A/D conversion of a sound signal;

   (B) two counters for respectively counting the input pulse signals of two series, said two counters having the initial count values different from each other; and

   (C) a decoder for alternately selecting the outputs of the two counters in synchronism with the pulse generating periods of said pulse signals of the two series and decoding the selected outputs so as to generate address signals, thereby generating interleave addresses both in the normal mode and in a long-time recording mode.

2. An interleave address generating circuit according to Claim 1, wherein said pulse generating means generates said pulse signals of two series by a combinational logic of a plurality of signals obtained by dividing the frequency of one clock signal, said pulse signals of two series alternately generated have the same frequency and said two counters count up at the same speed.

3. An interleave address generating circuit according to Claim 2, wherein said pulse generating means have two modes, one for alternately generating said pulse signals of two series each having four pulses and the other for alternately generating said pulse signals of two series each having three pulses.

4. An interleave address generating circuit according to Claim 2, wherein said decoder selects and outputs the output of the counter which is counting said pulse signals from the outputs of said two counters.

5. An interleave address generating circuit according to Claim 3, wherein said decoder selects and outputs an address signal in accordance with the signal which indicates whether said two counters are counting said pulse signals each having three pulses or said pulse signal each having four pulses and which is supplied to said decoder.

6. An interleave address generating circuit according to Claim 1, wherein said decoder includes a thinning-out circuit for generating an address signal for removing the data in a predetermined area of said RAM at the time of after-recording, thereby enabling intermittent reading of data at the time of after-recording.

7. An interleave address generating circuit according to Claim 6, wherein said RAM is divided into four areas and only the data at two areas of said four areas are serially read out at the time of after recording, thereby enabling the data in the long-time recording mode which is recorded at a tape travelling speed of half the normal speed to be read out at the normal tape travelling speed and, hence, to be reproduced at double the normal speed.

8. An interleave address generating circuit of a digital audio tape recorder comprising:
   a thinning-out circuit for generating an address signal for removing the data in a predetermined area of a RAM at the time of after-recording, thereby enabling intermittent reading of data at the time of after-recording.

9. An interleave address generating circuit according to Claim 8, wherein said RAM consists of four areas and only the data at two areas from said four areas are serially read out at the time of after-recording, thereby enabling the data in the long-time recording mode which is recorded at a tape travelling speed of half the normal speed to be read out at the normal tape travelling speed and, hence, to be reproduced at double the normal speed.

FIG. 1

7-BIT BINARY COUNTER 60

64FS

PULSE GENERATION DECODER 62

M32KL

0.5FS

FS

SELECTOR 70

M32K
M44.1K

COUNT VALUE CONTROLLER 72

1/2 or 1/4 64
64a

5BIT COUNTER (1) OF 26-NUMBERED NO-TATION 64b
R  c

5BIT COUNTER (2) OF 26-NUMBERED NO-TATION 64c
R  c

64d  c  Q̄  Q

64e  c  Q

E-PULSE SIGNAL

1/2 or 1/4 66
66a

5BIT COUNTER (1) OF 26-NUMBERED NO-TATION 66b
R  c

5BIT COUNTER (2) OF 26-NUMBERED NO-TATION 66c
R

66  R

O-PULSE SIGNAL

DECODER 80

M32KL

A13 A12 A11 A10 A9 A8 ———— A1 A0

82

OUTPUT CONTROL

ADR BUS

12

## FIG.2

| FIG.2A | FIG.2B |
|--------|--------|

## FIG.2A

FIG. 2B

FIG.3

E-PULSE SIGNAL

O-PULSE SIGNAL

EP 0 449 213 A2

FIG. 4

E-PULSE

O-PULSE

EP 0 449 213 A2

FIG.5

# FIG.6

O·SFS

FS

E-PULSE SIGNAL

O-PULSE SIGNAL

PULSE TRAIN OF OUTPUT OF E-COUNTER — $A_0$ $A_1$ $A_2$ $A_3$ $A_4$ $A_5$

PULSE TRAIN OF OUTPUT OF O-COUNTER — $B_0$ $B_1$ $B_2$ $B_3$ $B_4$ $B_5$

PULSE TRAIN OF INTERLEAVE ADDRESS — $A_0$ $A_1$ $A_2$ $B_0$ $B_1$ $B_2$ $A_3$ $A_4$ $A_5$ $B_3$ $B_4$ $B_5$

RAM AREA WRITING AND REPRODUCING ADDRESS FOR THE UPPER SIDE OF HEAD A

RAM AREA WRITING AND REPRODUCING ADDRESS FOR THE UPPER SIDE OF HEAD B

RAM AREA WRITING AND REPRODUCING ADDRESS FOR THE BACK SIDE OF HEAD A

RAM AREA WRITING AND REPRODUCING ADDRESS FOR THE BACK SIDE OF HEAD B

EP 0 449 213 A2

# FIG. 7A

EP 0 449 213 A2

# FIG. 7B

128 BLOCKS

HEAD A

32 SYMBOLS

La    Q    xxx

La    Q    even xxx

odd

128 BLOCKS

HEAD B

32 SYMBOLS

xxx    Q    Ra

xxx    Q    even Ra

odd

FIG.8

## FIG. 9

S13
S12
S11

A13
A12
A11

(e) JUMP FROM La(even) TO Rb(even)

(f) JUMP FROM La(odd) TO Rb(odd)

(g) JUMP FROM La(even) TO Rb(even)

(h) JUMP FROM La(odd) TO Rb(odd)

# FIG. IOA

AHEAD (EVEN)                     128 BLOCK

(e)·(g)

Q

$\begin{bmatrix} A12=L \\ A11=L \end{bmatrix}$        $\begin{bmatrix} A12=L \\ A11=H \end{bmatrix}$

32    EVEN DATA          ODD   DATA

SYMBOL

B HEAD (EVEN)                    128 BLOCK

Q

$\begin{bmatrix} A12=H \\ A11=L \end{bmatrix}$        $\begin{bmatrix} A12=H \\ A11=H \end{bmatrix}$

32    EVEN DATA          ODD DATA

SYMBOL

# FIG. IOB

AHEAD (ODD)                      128 BLOCK

(f)·(h)

Q

32

SYMBOL

B HEAD (ODD)                     128 BLOCK

Q

32

SYMBOL

FIG. 11

## FIG. 12A

RAM AREA A - - - - 127 BLOCK    RAM AREA B

0

127 BLOCK

4096 BYTES

4096 BYTES

31

SYMBOL

## FIG. 12B

0                127 BLOCK    0

RAM AREA A              RAM AREA B

FOR HEAD A              FOR HEAD B

BACK SIDE              BACK SIDE

4096 BYTES              4096 BYTES

SYMBOL                 SYMBOL

EP 0 449 213 A2

# FIG. 13

AREA | SUB | ATF | PCM | ATF | SUB

HEAD MODE ── REC ─ P3 ─ REC ──

SUB CODE
AFTER-RECORDING

ATF REPRODUCTION

PCM REPRODUCTION

EP 0 449 213 A2